# EUROPEAN PATENT APPLICATION

(11) **EP 3 460 640 A1**
(43) Date of publication of application: **27.03.2019**
(21) Application number: 17894570.5
(22) Date of filing: 31.05.2017
(51) Int. Cl.: G06F 3/041

(54) **MOIRÉ-RESISTANT TOUCH CONTROL SENSING FILM AND MANUFACTURING METHOD THEREOF**

(30) Priority: 24.01.2017 CN 201710059725
(71) Applicant: UC Nano Technologies Co., Ltd., Suzhou, Jiangsu 215123 (CN)
(72) Inventor: LIU, Zejiang, Suzhou Jiangsu 215123 (CN)
(74) Representative: Gulde & Partner
(86) International application number: PCT/CN2017/086620
(87) International publication number: WO 2018/137301

(57) **Abstract**

The present invention discloses an anti-Moiré pattern touch sensing film and a production method for the same. The anti-Moiré pattern touch sensing film includes a touch sensing layer, a link sensing region, and a flexible line connector of a controller. The touch sensing layer is formed by a plurality of transverse wires and a plurality of longitudinal wires arranged in a latitude-longitude grid shape, the transverse wires and the longitudinal wires are each distributed in a curve shape, and the transverse wires and the longitudinal wires are each covered with transparent protective layers on both sides, and then are combined to form the sensing layer. This design makes it convenient to monitor a process to reduce a rejection rate. In this patent, as the transverse wires and the longitudinal wires are arranged like wavy lines with a large curvature, wiring efficiency of a 3D printer is greatly improved, and a disconnection rate is greatly reduced due to the absence of right-angled vertices. More importantly, graphical arrangement of this patent can eliminate a Moiré pattern, and obviously improve a visual effect.

## Description

### TECHNICAL FIELD

The present invention relates to a touch sensing film and a production method for the same, and in particular, to an anti-Moiré pattern touch sensing film and a production method for the same, belonging to the field of touch technologies.

### BACKGROUND

As a core component of a human-computer interaction system, a touch sensing film is widely applied to various digital information display systems because of its advantages such as easy use, long service life, fast response speed, and space saving. The touch sensing film is one of core components of a touch display screen. When the touch display screen is viewed from a certain angle, there is an obvious Moiré interference pattern because of a linear or grid-type wire arrangement manner of a touch sensing film product, which affects a visual effect. Therefore, the prior art needs to be improved.

### SUMMARY

To resolve the foregoing technical problem, the present invention proposes an anti-Moiré pattern touch sensing film and a production method for the same. The film has a simple structure made of a light and thin material, and has safe and reliable touch performance.

To achieve the foregoing objective, technical solutions of the present invention are as follows: An anti-Moiré pattern touch sensing film includes a touch sensing layer, a link sensing region, and a flexible line connector of a controller. The touch sensing layer is formed by a plurality of transverse wires and a plurality of longitudinal wires arranged in a latitude-longitude grid shape, the transverse wires and the longitudinal wires are each distributed in a curve shape, and the transverse wires and the longitudinal wires are combined to form the touch sensing layer.

Preferably, the transverse wires and the longitudinal wires are each arranged in a sinusoidal shape with a large curvature or in a semicircular wave shape with a large curvature. According to the present invention, the transverse wires and the longitudinal wires are each arranged in the sinusoidal shape with a large curvature or in the semicircular wave shape with a large curvature, so that a Moiré pattern is eliminated well, and a problem of an obvious Moiré interference pattern existing in current touch sensing films is resolved. The large curvature has relatively high requirements on a production device and a raw material. If such a technical problem cannot be properly resolved, a product yield will be affected, or graphical abnormality easily occurs.

Preferably, the transverse wires and the longitudinal wires are each covered with transparent layers on both sides, and then are combined. The transparent layers in this patent mainly function to protect the wires, making it convenient to monitor a process to reduce a rejection rate. As the transparent layers are used, the present invention can reduce the product rejection rate by 10% to 20%.

Preferably, the transverse wires and the longitudinal wires are conductive wires with an insulating layer, or may be conductive fiber or conductive ink without an insulating layer.

Preferably, the transverse wires and the longitudinal wires are arranged by means of 3D printing or inkjet printing, which greatly improves wiring efficiency. Certainly, the present invention is not limited to the two printing manners, and another printing manner may be selected based on an actual need.

Meanwhile, the present invention further provides a production method for the anti-Moiré pattern touch sensing film, including the following steps:
(1) manufacturing a transverse wire film: forming graphical transverse wires in a curve shape with a large curvature on one transparent layer, and then covering the transverse wires with another transparent layer, to protect the transverse wires by using the two transparent layers, and complete manufacturing of the transverse wire film;
(2) manufacturing a longitudinal wire film: forming graphical longitudinal wires in a curve shape with a large curvature on one transparent layer, and then covering the longitudinal wires with another transparent layer, to protect the longitudinal wires by using the two transparent layers, and complete manufacturing of the longitudinal wire film; and
(3) combining the transverse wire film and the longitudinal wire film manufactured in step (1) and step (2) to form the touch sensing film.

Different numbers of transverse wires and longitudinal wires are disposed, the transverse wires and the longitudinal wires are evenly arranged at equal intervals in each direction, and the transverse wires and the longitudinal wires are each arranged in a curve shape with a large curvature.

The present invention has the following beneficial effects: The touch sensing film of the present invention has a simple structure made of a light and thin material, and has safe and reliable touch performance. Transverse wires and longitudinal wires are each covered with transparent layers on both sides, and then are combined, which makes it convenient to monitor a process to reduce a rejection rate. A graphical wiring design eliminates a Moiré pattern, and presents a comfortable and natural visual effect.

### BRIEF DESCRIPTION OF THE DRAWINGS

FIG. 1 is a schematic structural view according to the present invention;
FIG. 2 is a partial enlarged view according to the present invention;
FIG. 3 is a wire arrangement view according to the present invention;
FIG. 4 is a schematic structural view of a transverse wire film; and
FIG. 5 is a schematic structural view of a longitudinal wire film.

In the drawings: 1 represents a transverse wire, 2 represents a longitudinal wire, 3 represents a transparent layer, and 4 represents a flexible line connector.

### DETAILED DESCRIPTION

The present invention is further described in detail by using specific implementations.

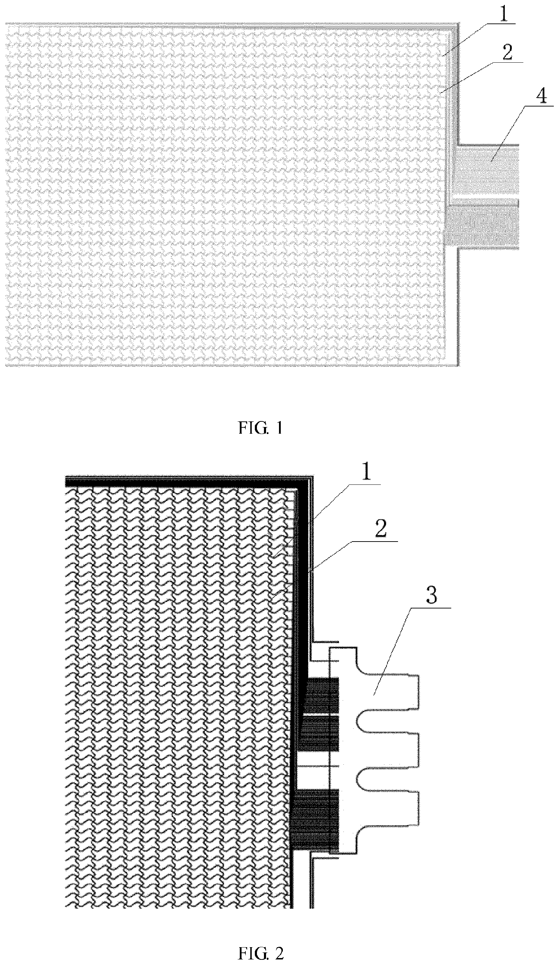

As shown in FIG. 1 to FIG. 3, the present invention discloses an anti-Moiré pattern touch sensing film, including a touch sensing layer, a link sensing region, and a flexible line connector of a controller. The touch sensing layer is formed by a plurality of transverse wires 1 and a plurality of longitudinal wires 2 arranged in a latitude-longitude grid shape, the transverse wires 1 and the longitudinal wires 2 are each distributed in a curve shape, and the transverse wires 1 and the longitudinal wires 2 are combined to form the touch sensing layer. In an embodiment, the transverse wires 1 and the longitudinal wires 2 are each arranged in a sinusoidal shape with a large curvature or in a semicircular wave shape with a large curvature. The transverse wires 1 and the longitudinal wires 2 are each arranged in the sinusoidal shape with a large curvature or in the semicircular wave shape with a large curvature, so that a Moiré pattern is eliminated well, and a problem of an obvious Moiré interference pattern existing in current touch sensing films is resolved. The large curvature has relatively high requirements on a production device and a raw material. If such a technical problem cannot be properly resolved, a product yield will be affected, or graphical abnormality easily occurs. However, the present invention overcomes the technical problem by arranging the transverse wires 1 and the longitudinal wires 2 in a curve shape with a large curvature. In this patent, the large curvature of the wire is as close as possible to a curvature of a circle, namely, 1/R.

The transverse wires 1 and the longitudinal wires 2 are each covered with transparent layers 3 on both sides, and then are combined. The transparent layers 3 in this patent mainly function to protect the wires, making it convenient to monitor a process to reduce a rejection rate. A rejection rate of products produced according to the method of the present invention is reduced by 10% to 20%.

The transverse wires 1 and the longitudinal wires 2 are conductive wires with an insulating layer, or may be conductive fiber or conductive ink without an insulating layer. In addition, both the transverse wires 1 and the longitudinal wires 2 are ultra-fine conductive wires. The transverse wires 1 and the longitudinal wires 2 are arranged by means of 3D printing or inkjet printing, which greatly improves wiring efficiency.

In this patent, as the transverse wires 1 and the longitudinal wires 2 are arranged like wavy lines with a large curvature, wiring efficiency of a 3D printer is greatly improved, and a disconnection rate is greatly reduced due to the absence of right-angled vertices. More importantly, graphical arrangement of this patent can eliminate a Moiré pattern, and obviously improve a visual effect.

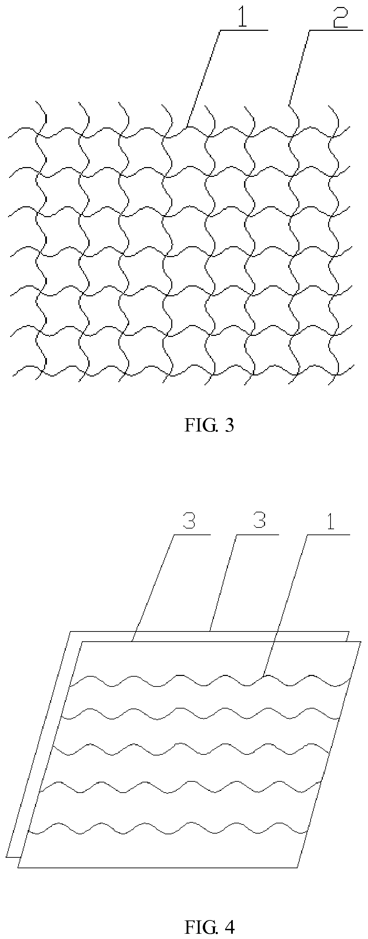

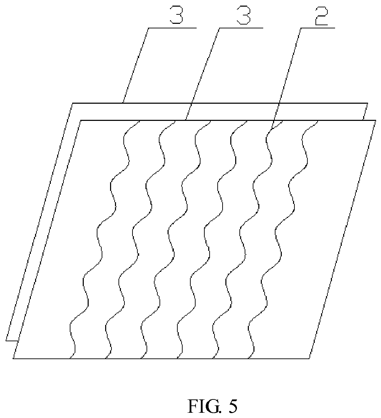

As shown in FIG. 4 and FIG. 5, the present invention further discloses a production method for the anti-Moiré pattern touch sensing film, including the following steps:
(1) manufacturing a transverse wire film: forming graphical transverse wires in a curve shape with a large curvature on one transparent layer, and then covering the transverse wires with another transparent layer, to protect the transverse wires by using the two transparent layers, and complete manufacturing of the transverse wire film;
(2) manufacturing a longitudinal wire film: forming graphical longitudinal wires in a curve shape with a large curvature on one transparent layer, and then covering the longitudinal wires with another transparent layer, to protect the longitudinal wires by using the two transparent layers, and complete manufacturing of the longitudinal wire film; and
(3) combining the transverse wire film and the longitudinal wire film manufactured in step (1) and step (2) to form the touch sensing film.

Different numbers of transverse wires and longitudinal wires are disposed, and the transverse wires and the longitudinal wires are evenly arranged at equal intervals in each direction.

A touch sensing film manufactured according to the method of the present invention has a high yield with a product rejection rate reduced by 10% to 20%, which is a significant progress in the industry. More importantly, the product structure eliminates a Moiré pattern, and presents a more comfortable and natural visual effect.

## Claims

1. An anti-Moiré pattern touch sensing film, comprising a touch sensing layer, a link sensing region, and a flexible line connector (4) of a controller, wherein the touch sensing layer is formed by a plurality of transverse wires (1) and a plurality of longitudinal wires (2) arranged in a latitude-longitude grid shape, the transverse wires (1) and the longitudinal wires (2) are each distributed in a curve shape, and the transverse wires (1) and the longitudinal wires (2) are combined to form the touch sensing layer.

2. The anti-Moiré pattern touch sensing film according to claim 1, wherein the transverse wires (1) and the longitudinal wires (2) are each arranged in a sinusoidal shape with a large curvature or in a semicircular wave shape with a large curvature.

3. The anti-Moiré pattern touch sensing film according to claim 2, wherein the transverse wires (1) and the longitudinal wires (2) are each covered with transparent layers (3) on both sides, and then are combined.

4. The anti-Moiré pattern touch sensing film according to claim 3, wherein the transverse wires (1) and the longitudinal wires (2) are conductive wires with an insulating layer.

5. The anti-Moiré pattern touch sensing film according to claim 3, wherein the transverse wires (1) and the longitudinal wires (2) are conductive fiber or conductive ink without an insulating layer.

6. The anti-Moiré pattern touch sensing film according to claim 4 or 5, wherein the transverse wires (1) and the longitudinal wires (2) are arranged by means of 3D printing or inkjet printing.

7. A production method for the anti-Moiré pattern touch sensing film according to claim 1, comprising the following steps:
(1) manufacturing a transverse wire film: forming graphical transverse wires in a curve shape with a large curvature on one transparent layer, and then covering the transverse wires with another transparent layer, to protect the transverse wires by using the two transparent layers, and complete manufacturing of the transverse wire film;
(2) manufacturing a longitudinal wire film: forming graphical longitudinal wires in a curve shape with a large curvature on one transparent layer, and then covering the longitudinal wires with another transparent layer, to protect the longitudinal wires by using the two transparent layers, and complete manufacturing of the longitudinal wire film; and
(3) combining the transverse wire film and the longitudinal wire film manufactured in step (1) and step (2) to form the touch sensing film.

8. The production method for the anti-Moiré pattern touch sensing film according to claim 7, wherein different numbers of transverse wires and longitudinal wires are disposed, and the transverse wires and the longitudinal wires are evenly arranged at equal intervals in each direction.

9. The production method for the anti-Moiré pattern touch sensing film according to claim 8, wherein the transverse wires (1) and the longitudinal wires (2) are each arranged in a sinusoidal shape with a large curvature or in a semicircular wave shape with a large curvature.
